Europäisches Patentamt

European Patent Office

Office européen des brevets

(11) Publication number: **0 022 315**
A1

## EUROPEAN PATENT APPLICATION

(21) Application number: 80301936.3

(22) Date of filing: 09.06.80

(51) Int. Cl.³: **B 01 D 53/02**

(30) Priority: 08.06.79 US 46765

(43) Date of publication of application:
14.01.81 Bulletin 81/2

(84) Designated Contracting States:
BE DE FR GB IT NL SE

(71) Applicant: JOHN ZINK COMPANY
4401, South Peoria
Tulsa, Oklahoma, 74103(US)

(72) Inventor: Schwartz, Robert E.
4227 East 52ND Place
Tulsa Oklahoma 74105(US)

(72) Inventor: Dinsmore, Harold L.
2152 N. Vancouver
Tulsa, Oklahoma 74127(US)

(72) Inventor: Peters, Donald, J.
900 W. Twin Oaks
Broken Arrow Oklahoma 74012(US)

(72) Inventor: Long, Gary W.
7451 E. 84th. St
Tulsa Oklahoma 74145(US)

(74) Representative: Allen, William Guy Fairfax et al,.
J.A. KEMP & CO. 14 South Square Gray's Inn
London WC1R 5EU(GB)

(54) Process and apparatus for recovering hydrocarbons from air-hydrocarbon vapor mixtures.

(57) A process and apparatus for recovering hydro-carbons from an air-hydrocarbon vapor mixture. The air hydrocarbon vapor mixture is caused to flow through a first bed (12,14) of solid adsorbent, whereby the hydrocarbons are removed from the mixture and a residue gas stream by substantially hydrocarbon-free air is vented to atmosphere and a second bed (14,12) of solid adsorbent having hydrocarbons adsorbed thereon is desorbed by applying vacuum thereto. The flow pattern is cyclically changed, so that air-hydrocarbon vapor mixture is fed through a bed of solid adsorbent which has just been regenerated. Use of a vacuum pump (72) ensures that a major portion of the hydrocarbons is desorbed. Subsequently feeding a small quantity of heated hydrocarbon free air into the beds (at 66) causes additional hydrocarbons to be stripped therefrom and the bed is then subjected to further evacuation by ejector jet pumping, while continuing to evacuate the bed by vacuum pumping, whereby yet additional hydrocarbons are desorbed therefrom. The air-hydrocarbon vapor mixture produced in the regeneration of the beds is contacted wtih a liquid absorbent whereby a major portion of the hydrocarbons are absorbed therefrom and recovered.

./...

– 1 –

## DESCRIPTION

TITLE: PROCESS AND APPARATUS FOR RECOVERING HYDROCARBONS
FROM AIR-HYDROCARBON VAPOR MIXTURES

The present invention relates to a process and apparatus for recovering hydrocarbons from air-hydrocarbon vapor mixtures.

In handling multicomponent hydrocarbon liquids, such as gasolene or kerosene, air-hydrocarbon vapor mixtures are readily produced which cannot be vented directly to the atmosphere due to the resulting pollution and fire or explosion hazzard. Consequently, various proposals have been made for removing the hydrocarbon vapors from such mixtures, whereby the remaining air can safely be vented to atmosphere. The removed hydrocarbons are generally liquefied and recombined with hydrocarbon liquid from which they were vaporized, thereby making their recovery economically advantageous.

A process for the recovery of light mixed hydrocarbon vapors from a mixture with air expelled as a result of storage breathing or loading of a vented hydrocarbon vessel is described in U.S. Patent 4066 423. The hydrocarbon vapor mixture is passed through a first bed of solid adsorbent, which adsorbs a majority of the hydrocarbons contained in the mixture and the residue gas is substantially hydrocarbon-free air. While this adsorbing is taking place, a second bed of solid adsorbent having hydrocarbons adsorbed therein is regenerated by evacuation. The completeness of the regeneration of the adsorbtion beds is dependent solely on the degree of vacuum produced in the beds. Because vacuum pumps are incapable of lowering the pressure to zero, some adsorbed hydrocarbons are left, and this reduces the capacity of the beds to adsorb additional hydrocarbons and reduces the service life of the adsorbent.

The hydrocarbon-rich air-hydrocarbon mixture produced as a result of the regeneration of the bed is contacted with a liquid absorbent, whereby hydrocarbons are removed therefrom and the residue gas stream from the absorbtion step is recycled to the bed through which the inlet air-hydrocarbon mixture is flowing. The liquid absorbent utilized in U.S. Patent 4,066,423 is produced by condensing, by cooling, liquid hydrocarbons from the air-hydrocarbon vapor mixture produced in the evacuation regeneration step.

Numerous other suitable processes and apparatus are disclosed, e.g. in U.S. Patents 3,897,193; 3,768,232; 3,867,111; 3,455,089; 3,543,484 and 3,766,283. These all use solid adsorbent for removing hydrocarbons and regeneration of the adsorbent is incomplete, whereby hydrocarbons are left on the adsorbent, reducing the capacity, efficiency and service life thereof.

The present invention is characterised in that the bed which has just been evacuated is further evacuated by ejector jet pumping, while continuing to evacuate the bed
by vacuum pumping, whereby additional hydrocarbons are
desorbed therefrom.

This achieves a more complete regeneration of the
adsorbent and can be accomplished by prior processes, thereby
making the process more efficient, more economical to carry
out and increasing the service life of the adsorbent used.

Advantageously, a stream of the liquid from which the
hydrocarbon vapors originated is used to absorb the removed
hydrocarbons in a simple and economical system, thereby
obviating the need for condensing the removed hydrocarbons
using elaborate refrigeration or other similar apparatus,
which is expensive to install and operate.

A quantity of hydrocarbon-free air may be introduced
into the second bed while evacuating said bed, whereby
additional hydrocarbons are stripped from the bed and an
additional air hydrocarbon mixture is produced.  The hydrocarbon
free air is advantageously heated prior to introducing into
the bed for this purpose, to improve the efficiency of the
thus achieved stripping action.

The residue gas from the liquid absorbent is
preferably used as the power gas for the ejector jet pumping
step and the air-hydrocarbon mixture produced during the
evacuation and ejector jet pumping is preferably cooled prior
to contacting the mixture with the liquid absorbent.

Desirably, the hydrocarbons contained in the inlet air-
hydrocarbon mixture are vaporized gasolene light ends, the
liquid absorbent utilized being gasolene and the gasolene being continuously recycled between the absorber and a source of stored gasolene.

As previously, the bed is advantageously evacuated using a liquid seal vacuum pump. However, this liquid for the liquid seal vacuum pump is preferably separated from condensed hydrocarbon liquids, the separated liquid seal vacuum liquid being cooled and recycled to the liquid seal vacuum pump, the air hydrocarbon mixture which is separated being contacted in the absorber with a lean liquid absorbent, whereby a hydrocarbon rich liquid absorbent is produced and finally the hydrocarbon liquid separated is combined with a hydrocarbon liquid absorbent.

The invention also contemplates apparatus for carrying out this process.

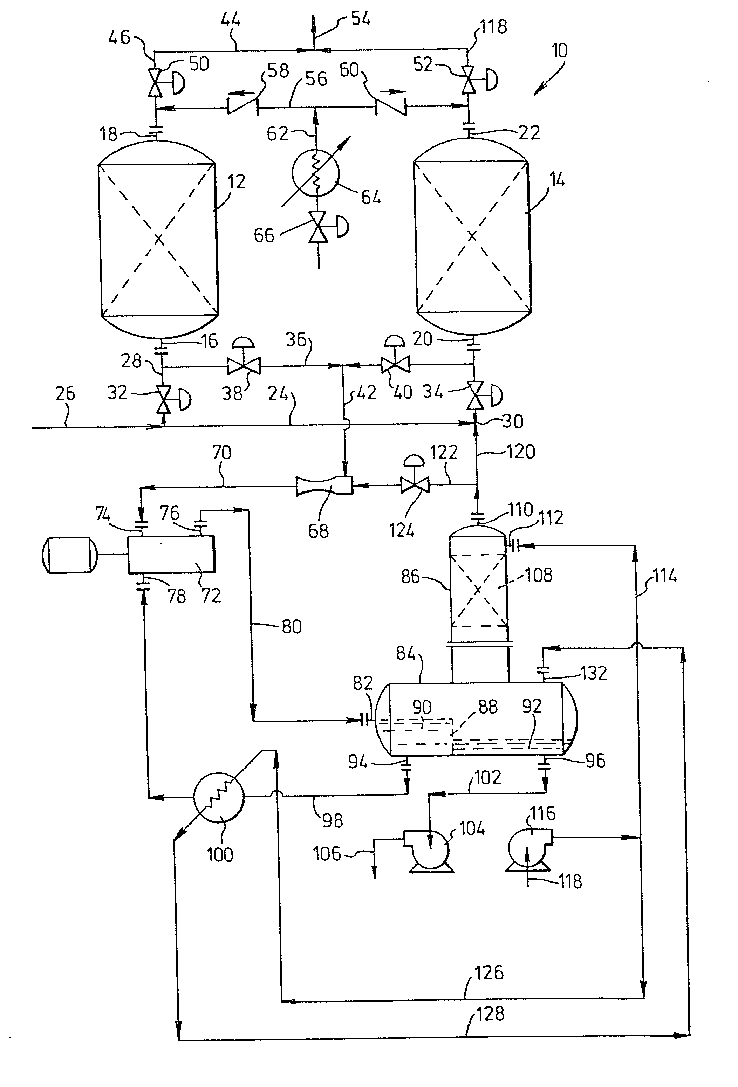

In order that the invention will more readily be understood, the following description is given, merely by way of example, reference being made to the accompanying drawing, in which the only Figure is a schematic flow diagram of one embodiment of apparatus according to the invention, use of the apparatus illustrating the process of the invention. The illustrated apparatus of the present invention is designated by the numeral 10 and comprises a pair of adsorbers 12 and 14, which have inlet connections 16, 20, have outlet connections 18, 22 respectively, to cause the gases to flow through a bed of solid adsorbent in each adsorber. Activated carbon is the preferred adsorbent, in that it is particularly suitable for adsorbing light hydrocarbon vapors of the type found in air-hydrocarbon vapor mixtures and for vacuum regeneration. An inlet header 24 is connected to an inlet conduit 26, and to adsorbers 12 and 14, via a pair of conduits

- 5 -

28 and 30 having switching valves 32 and 34, respectively. Also connected to conduits 28 and 30, but at points thereon between the valves 32 and 34 and the connection 16 and 20 of the adsorbers 12 and 14, is a header 36, itself having switching valves 38 and 40. Between valves 38 and 40, the header 36 is connected to a conduit 42. A residue gas header 44 is connected via a pair of conduits 46 and 48, provided with valves 50 and 52, to the connections 18 and 22 of the adsorbers 12 and 14. Conduit 54, which may include a flame arrestor (not shown), is connected to the header 44 between valves 50 and 52 and serve to vent residue gas to atmosphere. A stripping air header 56 is connected to the conduits 46 and 48, below valves 50 and 52 and includes a pair of check valves 58 and 60, arranged on either side of the conduit 62, to which is connected an air heater 64 and an air inlet valve 66. The end of the conduit 62 upstream of valve 66 is left open to atmosphere and an air filter (not shown) may be attached thereto to prevent solid impurities entering the adsorbers.

The other end of conduit 42 is connected to the suction connection of an ejector jet pump 68, the discharge connection of which is connected to a conduit 70 leading to the suction inlet 74 of a vacuum pump 72.

This is preferably of the liquid seal or liquid ring type and such a pump is capable of producing a high vacuum, is relatively inexpensive and is much safer in this type of service. Conventionally, such a pump uses a liquid seal which is circulated through the pump and can be confined in a closed circuit and cooled, which keeps the pump and the gases flowing therethrough cool, the presence of the liquid

- 6 -

seal precluding any possibility of explosions, since the
gas cannot approach its auto-ignition temperature, nor can
sparking occur due to mechanical failures within the pump.

The pump 72 includes a discharge connection 76 and
a seal liquid inlet connection 78 for returning seal liquid
thereto.  A conduit 80 is connected to the discharge
connection 76 and to the inlet 82 of a separator 84, the top
of which is preferably integral with an absorber 86,
although the absorber 86 and separator could be separate
vessels.

The separator 84 is a three-phase separator capable
of separating the seal liquid for the pump 72, condensed
hydrocarbons and an air-hydrocarbon vapor mixture from each
other.  The separator 84 shown, includes a weir 88 which
divides the separator into a forward compartment 90 and a
rear 92.  The liquids entering the separator are separated in
the forward compartment, the seal liquid being heavier and
emisable with the condensed hydrocarbon liquids, so that the
seal liquid accummulates in the bottom of the compartment 90
from where it is removed via an outlet connection 94.
Condensed hydrocarbon liquids spill over the weir into
compartment 92 and hydrocarbon-rich liquid absorbent from the
absorber 86 enters the compartment 92 by way of the open
bottom of the absorber 86 and also accummulates in the
compartment 92.  Rich liquid absorbent-condensed hydrocarbon
liquid mixture is removed from the separator 84 by way of
an outlet connection 96, while the separated air-hydrocarbon
vapor mixture passes from the separator 84 into the absorber
86.

A conduit 98 extends from connection 94 to seal the

- 7 -

liquid inlet connection 78 of the pump 72 and passes through a cooler 100. In certain instances, a circulation pump can be provided in conduit 98 between the separator 84 and cooler 100, which may be in the form of a heat-exchanger, which cools the seal liquid by passing it in heat-exchange relationship with the stream of liquid of the same characteristics as that used as the absorption medium in the absorber 86. Rich liquid absorbent-condensed hydrocarbon liquids may be discharged from compartment 92 _via_ outlet 96, conduit 102, pump 104 and conduit 106, where it is preferably stored separately from the lean liquid absorbent to ensure the lowest possible vapor pressure of the lean liquid absorbent and maximum efficiency.

The absorber 86 includes a section of packing material 108, for example vapor liquid contract trays or the like, disposed in the top portion to bring about intimate contact between the liquid absorbent flowing downwardly and the air-vapor mixture flowing upwardly. Residue gas outlet connection 110 and liquid absorbent inlet connection 112 are provided above the packed section 108, the lean liquid absorbent inlet 112 being connected _via_ conduit 114 to a lean liquid absorbent inlet 118, the liquid being delivered by pump 116. A portion of the pumped liquid is fed _via_ line 126 to heat exchanger 100 and thence via line 128 to the inlet connection 132 of the separator 84.

In certain cases, the lean liquid absorbent may be too warm to use directly as an absorbent and seal fluid coolant, and a heat exchanger (not shown) can be disposed in conduit 114 so that it may be cooled, e.g. by water or a refrigerant.

The residue gas stream produced in the absorber 86

leaves _via_ connection 110 and flows into conduit 120 and thence to header 24. A conduit 122, connected to conduit 120, can feed the fluid under pressure, _via_ valve 124, to the jet forming nozzle of the ejector 68.

The switching of valves 32, 34, 38, 40, 50, 52, 56 and 124 can be effected manually, but is preferably automatically controlled by a conventional cycle controller. The length of each cycle can be controlled by a timer or other instrument sensing one or more variables in the operation of the apparatus, such as the degree of vacuum achieved in the adsorbent bed being generated, the composition of the gas stream being vented to the atmosphere etc.

In operation, the various valves are operated so that the inlet air-hydrocarbon vapor mixture is caused to flow through one of the adsorbers 12 or 14, while the other is being regenerated. For example, during a first cycle, valves 32 and 50 are opened and the remaining valves closed, whereby the mixture flows into the adsorber 12 but not into the adsorber 14 and flows from adsorber 12 _via_ conduit 46 and header 44 to the air vent conduit 54 with valve 38 closed and valve 40 opened, the adsorbent fluid within the adsorber 14 communicates with the suction connection 74 of vacuum pump 72, at this time the valves 66 and 124 being closed.

During this first part of the cycle, gases flowing through adsorber 12 have the hydrocarbons adsorbed on the bed and a substantially hydrocarbon free air is vented to atmosphere. Simultaneously, the adsorbent disposed in adsorber 14 is evacuated and the hydrocarbons are desorbed therefrom. A hydrocarbon-rich air-hydrocarbon vapor mixture is withdrawn from the bed in adsorber 14 and flows through

- 9 -

the vacuum pump 72. A cooled seal liquid, preferably water or a mixture of water and a substance which functions as an anti-freeze agent in the winter and as an agent to lower seal fluid vapor pressure in the summer, e.g. ethylene glycol, flows into the vacuum pump 72. The intimate contact of the air-hydrocarbon mixture with the cool seal liquid while flowing through the vacuum pump cools the vapor mixture and causes heavy hydrocarbons contained therein to be condensed. The resulting stream of hydrocarbon-rich air-hydrocarbon vapor mixture and seal liquid and condensed hydrocarbon liquids flows from the pump into the separator 84. While passing through the separator, the air-hydrocarbon vapor mixture, seal liquid and condensed hydrocarbons are separated from each other in the manner previously described, the separated condensed hydrocarbon liquids spilling over the weir 82 and flowing into the compartment 92 where they combine with rich liquid absorbent which flows into the compartment 92 from the absorber 86 and is removed therefrom by way of the connection 96 to a storage facility.

A stream of lean liquid absorbent is pumped from a source by the pump 116 and flows into the absorber 86 as well as through the heat exchanger 100 as described above. The absorbent flows downwardly within the absorber and intimately contacts the separated air-hydrocarbon mixture which is flowing upwardly through the separator so that the hydrocarbons are absorbed and removed, so that a residue gas stream contains a major portion of air and a minor portion of hydrocarbons. This stream leaves the absorber and flows into the header 24 where it combines with the inlet air-hydrocarbon vapor mixture and flows through the absorber 12 where the hydrocarbons are adsorbed therefrom.

During the latter part of this cycle, after a major portion of the hydrocarbons adsorbed in the bed of adsorbent within the adsorbent 14 have been desorbed therefrom by the vacuum pump 72, valve 66 in conduit 62 is opened, whereby a relatively small quantity of hydrocarbon-free air for the atmosphere enters, is heated, flows through check valve 60 into the adsorber 14. This heated air flows through the bed of adsorbent and is withdrawn therefrom by the vacuum pump 72 as described previously. The air serves to strip additional hydrocarbons from the bed which were not desorbed by the action of the vacuum pumping.

Simultaneously with, or after the required quantity of heated air has been introduced into the adsorber 14, valve 124 is opened and this causes a portion of the residue gas stream from the absorber 86 to flow through the jet forming nozzle of the ejector 68 and into the vacuum pump 72. This causes a suction to be produced which is in addition to the suction produced by the vacuum pump 72 exerted on the bed of adsorbent within the adsorber 14, which evacuates the adsorber further and causes additional hydrocarbons to be desorbed therefrom.

Thus, the combination of the initial evacuation of the adsorber 14 by vacuum pumping, stripping the adsorbent bed with heated hydrocarbon-free air and then evacuating the adsorbent bed brings about the regeneration of the bed to a greater degree than is possible by vacuum pumping alone. This more complete regeneration of the bed increases the capacity of the bed to adsorb additional hydrocarbons, increases the overall efficiency of the apparatus 10 and

- 11 -

increases the service life of the adsorbent.

After the adsorbent fed within the adsorber 14 has been fully regenerated and that within the adsorber 12 has been fully loaded with hydrocarbons, the valve 124 is closed and the switching valves are reversed, so that adsorber 14 acts to adsorb the hydrocarbons from the incoming mixture and from the absorber 86, whilst the adsorber 12 is regenerated in the same manner as described above. The flow pattern is continuously changed or cycled whereby when the adsorbent bed through which the inlet vapor mixture is flowing becomes loaded with adsorbed hydrocarbons, the inlet mixture is caused to flow into the bed which has thus been regenerated.

The apparatus is particularly suitable for recovering vaporized gasolene light ends mixed with air produced as a result of loading gasolene into tank trucks and other vessels. In this application, the air-gasolene vapor mixture is processed in the apparatus and the liquid absorbent used is gasolene which can be pumped from a storage facility into the absorber 86 from which the rich gasolene and condensed hydrocarbons are returned to the gasolene storage.

Example

A typical gasolene truck loading terminal has the following loading pattern:-

| | |
|---|---|
| Maximum instantaneous rate | - 8000 litres per minute |
| Maximum throughput in 15 minutes | - 60,000 litres |
| Maximum throughput in 1 hour | - 174,545 litres |
| Maximum throughput in 4 hours | - 610,909 litres |

- 12 -

Maximum throughput daily  -  349,090 litres
The gasolene loaded is deemed to have the following
properties:-

Summer: 543 millimetres mercury rvp, 24°C maximum
Winter: 760 millimetres mercury rvp, -12°C minimum

It is recognized that the hydrocarbon concentration of
the air-hydrocarbon vapor generated by loading gasolene into
the trucks will vary according to gasolene volatility and
the degree of air saturation attained.  Based on the above
gasolene properties and other experience, a desired hydrocarbon
concentration of 35% by volume is selected.

The apparatus is designed for an approximately 15
minutes cycle time and consequently it is necessary to design
each adsorption vessel 12 and 14 to handle a net air-
hydrocarbon vapor influent of 10 cubic metres per minute and
75 cubic metres per minute each cycle, based on a 1.2 vapor
growth factor.  Approximately 4100 kilograms of the
appropriate activated carbon is chosen and distributed
equally in two 2.14 metre in diameter by approximately 2.4
metre in height adsorption vessels 12 and 14.  These vessels
are operated near ambient temperature and only slightly above
atmospheric pressure during the adsorption cycle.  A liquid
ring vacuum pump 72 with a 22.4 kilowatt output electric motor
is provided for regeneration of the beds of carbon after each
adsorption cycle.  Very effective regeneration of the carbon
beds can be accomplished in each cycle by the introduction,
under high vacuum conditions, of approximately .85 standard
cubic metres of air heated to 93°C to 149°C.  The
regeneration apparatus provided allows attainment of 49
millimetres of mercury absolute pressure each cycle with the vacuum pump 72 alone, and with the vacuum assist ejector 68, an absolute pressure of 12 millimetres of mercury or less.

To accomplish the object of recovery, concentrated hydrocarbon vapors containing only 5 to 20% by volume air are discharged from the vacuum pump 72 to a 61 centimetre diameter by approximately 3.6 metre high packed absorption column 86 integrally connected to a 1 metre diameter by approximately 2.4 metre length separator 84, where the major portion of the hydrocarbon vapors are absorbed and thereby recovered into a downward flowing system of gasolene. The liner portion of hydrocarbon vapors not immediately absorbed into the gasolene absorbent leaves the top of the absorber where they flow to whichever adsorber 12 or 14 is in the adsorption mode. Eventually almost all of the hydrocarbon vapors are recovered.

The pumps 104 and 106 are centrifugal pumps, each with 3.73 kilo watt output electric motor drivers which circulate 57 litres per minute of gasolene from storage facilities for purposes of providing the absorption medium and to provide the necessary seal fluid cooling medium.

The apparatus described above can be expected to remove and recover the hydrocarbon vapors generated from the transport loading rack such that less than 10 milligrams of hydrocarbons will be vented to the atmosphere per litre of gasolene loaded.

C L A I M S

1. A process for recovering hydrocarbons from an inlet air-hydrocarbon vapor mixture comprising passing said inlet mixture through a first bed of solid absorbent, having an affinity for hydrocarbons, whereby hydrocarbons are adsorbed on said bed and a residue gas stream of substantially hydrocarbon-free air is produced, venting a substantially hydrocarbon-free air to the atmosphere, evacuating a second bed of solid absorbent having hydrocarbons adsorbed thereon by vacuum pumping to desorb the hydrocarbons from the bed, contacting the air hydrocarbon mixture produced during the evacuation with a liquid absorbent having an affinity for hydrocarbons, whereby a major portion of the hydrocarbons are removed therefrom and a residue gas stream comprising air and a minor portion of hydrocarbons are produced, combining the residue gas stream with the inlet air, whereby hydrocarbons contained therein are adsorbed on the first bed of a solid adsorbent, periodically changing the flow pattern of the inlet air-hydrocarbon mixture and changing the bed of solid adsorbent being evacuated, whereby, when the bed through which the inlet air-hydrocarbon mixture is flowing becomes loaded with adsorbed hydrocarbons, the inlet air hydrocarbon mixture is caused to flow through the bed which has just been evacuated, characterised in that the bed which has just been evacuated is further evacuated by ejector jet pumping while continuing to evacuate said bed by vacuum pumping, whereby additional hydrocarbons are desorbed therefrom.

2.      A process according to claim 1, characterised in that a quantity of hydrocarbon-free air is introduced into said second bed while evacuating said bed, whereby additional hydrocarbons are stripped from said bed and an additional air hydrocarbon mixture is produced.

3.      A process according to claim 2, characterised in that the hydrocarbon-free air is heated prior to introducing into said bed.

4.      A process according to claim 1, 2 or 3, characterised in that the residue gas stream from said liquid absorber is used as the power gas for the ejector jet pumping step.

5.      A process according to claim 4, characterised in that the air-hydrocarbon mixture produced during the evacuation and ejector jet pumping is cooled prior to contacting the mixture with the liquid absorbent.

6.      A process according to any preceding claim, characterised in that the hydrocarbons contained in the inlet air-hydrocarbon mixture are vaporized gasolene light ends, in that the liquid absorbent utilized is gasolene, and in that the gasolene is continuously recycled between the absorber and a source of stored gasolene.

7.      A process according to any preceding claim, characterised in that evacuation of said bed is carried out using a liquid seal vacuum pump, in that the liquid from the liquid seal vacuum pump is separated from condensed hydrocarbon liquids, in that the separated liquid seal vacuum pump liquid is cooled and recycled to the liquid seal vacuum pump, in that the air hydrocarbon mixture which is separated is contacted in the absorber with a lean liquid absorbent whereby a hydrocarbon rich liquid absorbent is produced and in that the hydrocarbon liquid separated is combined with a hydrocarbon liquid absorbent.

8.    A process according to claim 7, characterised in that the liquid recycled to the liquid seal vacuum pump is cooled by passing it in heat-exchange relationship with a stream of the liquid absorbent.

9.    Apparatus for recovering hydrocarbons from an air-hydrocarbon vapor mixture, comprising a pair of adsorbers (12, 14) containing beds of solid adsorbent having an affinity for hydrocarbons and having first (16, 20) and second (18, 22) connections on opposite sides of said beds, valves (32, 34) associated with said first connections for selectively causing air-hydrocarbon vapor mixture to flow through one or the other of said adsorbers and from the associated second connection to atmosphere, a vacuum pump (72) having a suction connection selectively connectable, _via_ valve means (38, 40), to the other of said adsorbers (12, 14), an absorber (86) connected to the discharge connection of the vacuum pump for contacting the air-hydrocarbon vapor mixture with a liquid absorbent, characterised in that an ejector pump (68) is provided and has its suction connection connectable, _via_ said valve means (38, 40), to the other of said adsorbers (12, 14).

10.    Apparatus according to claim 9, characterised in that the inlet nozzle of said jet ejector Pump (68) is connected to the outlet (110) of said liquid absorber.

11.    Apparatus according to claim 9 or 10, characterised in that an air inlet (62, 66) is provided for selectively allowing air to be drawn in via said second connection to said other of the adsorbers (12, 14) during evacuation thereof.

12.    Apparatus according to claim 11, characterised in that a heater (64) is provided for heating air passing through said air inlet.

13.    Apparatus according to any one of claims 9 to 12, characterised in that said vacuum pump is a liquid seal pump (72), in that a separator (84) for separating an air-hydrocarbon vapor mixture, condensed hydrocarbon liquids and seal liquid from each other and combining rich liquid absorbent with condensed hydrocarbon liquids is connected to the discharge (76) of said vacuum pump, in that a connection (98) is provided for feeding the separated seal liquid from said separator to the liquid seal of said pump, and in that the liquid absorber is mounted on said separator whereby rich liquid absorbent is returned to said separator.

European Patent Office ·

Application number

EP 80 30 1936.3

# EUROPEAN SEARCH REPORT

## DOCUMENTS CONSIDERED TO BE RELEVANT

| Category | Citation of document with indication, where appropriate, of relevant passages | Relevant to claim |
|---|---|---|
| E | EP - A1 - 0 015 413 (LINDE) <br> * claim 1; fig. 1 * <br> -- | 1,4,9 |
| | GB - A - 989 073 (UNION CARBIDE CORP.) <br> * page 10, lines 15 to 39; fig. 3 * <br> -- | 1,9 |
| | DE - A - 1 544 113 (RIMER MANUFACTURING CO.) <br> * claim 3 * <br> ---- | 1 |

**CLASSIFICATION OF THE APPLICATION (Int. Cl.³)**

B 01 D 53/02

**TECHNICAL FIELDS SEARCHED (Int.Cl.³)**

B 01 D 53/02

B 01 D 53/04

B 01 D 53/34

**CATEGORY OF CITED DOCUMENTS**

X: particularly relevant

A: technological background

O: non-written disclosure

P: intermediate document

T: theory or principle underlying the invention

E: conflicting application

D: document cited in the application

L: citation for other reasons

&: member of the same patent family, corresponding document

The present search report has been drawn up for all claims

| Place of search | Date of completion of the search | Examiner |
|---|---|---|
| Berlin | 17-10-1980 | KÜHN |

EPO Form 1503.1  06.78